# EUROPÄISCHE PATENTSCHRIFT

(11) **EP 3 454 027 B1**
(45) Veröffentlichungstag und Bekanntmachung des Hinweises auf die Patenterteilung: **02.10.2019**
(21) Anmeldenummer: 17189901.6
(22) Anmeldetag: 07.09.2017
(51) Int. Cl.: G01K 1/16, G01N 27/12

(54) **MESSAUFNEHMER ZUM ERMITTELN DER FEUCHTIGKEIT**
SENSOR FOR DETERMINING MOISTURE
CAPTEUR DE MESURE DESTINÉ À LA DÉTECTION D'HUMIDITÉ

(43) Veröffentlichungstag der Anmeldung: 13.03.2019
(73) Patentinhaber: E+E ELEKTRONIK GES.M.B.H., 4209 Engerwitzdorf (AT)
(72) Erfinder: JAHN, Karl, 4623 Gunskirchen (AT)
(74) Vertreter: Maikowski & Ninnemann Patentanwälte Partnerschaft mbB

(56) Entgegenhaltungen:
- EP-A1- 0 970 457
- DE-A1-102011 111 959

## Beschreibung

Diese Schrift betrifft Ausführungsformen eines Messaufnehmers zum Ermitteln der Feuchtigkeit, beispielsweise für die Zwecke der Meteorologie- Datenerfassung.

Aus dem Stand der Technik ist es bekannt, dass bei einem Messaufnehmer zur Ermittlung der Feuchtigkeit der Umgebungsluft ein Feuchtigkeitssensor auf eine Temperatur oberhalb der Umgebungstemperatur gebracht wird. Dadurch kann die relative Feuchte an der Messstelle verringert werden und somit die Gefahr einer Betauung, welche die Messung verfälschen könnte, vermindert werden. Sodann kann durch einen eigenen Temperaturmessfühler des Feuchtigkeitssensors diese Übertemperatur ermittelt werden. Aus dem Feuchtigkeitswert, welcher von einem Feuchtigkeitsmessfühler des Feuchtigkeitssensors ermittelt worden ist, sowie aus der Übertemperatur kann zum Beispiel der Wasserdampfpartialdruck ermittelt werden.

Ein Beispiel eines solchen Feuchtigkeitssensors für einen Messaufnehmer ist aus dem Datenblatt zu den Vorrichtungen des Typs "EE33" der E+E ELEKTRONIK Ges.m.b.H bekannt, welches über die URL http://downloads.epluse.com/fileadmin/data/product/ee33/Datenblatt_EE33.pdf bezogen werden kann.

Außerdem können bei dem Feuchtigkeitssensor des Messaufnehmers der Feuchtigkeitsmessfühler und der Temperaturmessfühler monolithisch integriert sein, wie es beispielsweise in dem Datenblatt zu der Vorrichtung des Typs "HMC01" der E+E ELEKTRONIK Ges.m.b.H beschrieben ist, welches über die URL http://downloads.epluse.com/fileadmin/data/product/ee33/HMC01_deutsch.pdf bezogen werden kann.

Zur finalen Berechnung der tatsächlichen Feuchtigkeit der Umgebung kann es zweckmäßig sein, neben der Temperatur, die am Feuchtigkeitsmessfühler vorherrscht, die tatsächliche Umgebungstemperatur zu ermitteln, also jener Umgebung, deren Feuchtigkeitswert festzustellen ist. Hierzu ist ein Umgebungstemperatursensor erforderlich, der zusätzlich zu dem Feuchtigkeitssensor vorzusehen ist und die Umgebungstemperatur möglichst unbeeinflusst von der am Feuchtigkeitsmessfühler vorherrschenden erhöhten Temperatur ermittelt.

In diesem Zusammenhang ist es bekannt, dass bei einem Messaufnehmer der Feuchtigkeitssensor und der Temperatursensor zur Messung der Umgebungstemperatur jeweils in einem separaten Gehäuse untergebracht sind und somit separat voneinander positioniert werden können. Beispielsweise beschreibt die Benutzeranleitung zu der Vorrichtung des Typs "HMP155" der VAISALA Oyj ein derartiges Vorgehen, wobei dieses Dokument über die URL http://www.vaisala.com/Vaisala%20Documents/User%20Guides%20and%20Quick%20R ef%20Guides/HMP155_User_Guide_in_English.pdf bezogen werden kann. Bei dieser verteilten Anordnung eines Messaufnehmers kann zwar die Umgebungstemperatur vergleichsweise exakt ermittelt werden, allerdings ist die Installation des Messaufnehmers aufgrund der beiden separaten Gehäuse umständlich.

Ein Messaufnehmer, bei dem sowohl der Feuchtigkeitssensor als auch der Temperatursensor zur Messung der Umgebungstemperatur an einem gemeinsamen Grundkörper befestigt sind, ist aus dem Datenblatt zu der Vorrichtung des Typs "HygroMet4" der ROTRONIC bekannt, welches über die URL https://www.rotronic.com/en/productattachments/index/download?id=929 bezogen werden kann.

Problematisch bei der letztgenannten Vorrichtung ist jedoch, dass der Temperatursensor zur Messung der Umgebungstemperatur das distale Ende des Messaufnehmers bildet und somit relativ leicht beschädigt werden kann. Darüber hinaus befindet sich der Temperatursensor in unmittelbarer Nähe zum Feuchtigkeitssensor, womit die von dem Temperatursensor ermittelte Temperatur unter Umständen nicht unbeeinflusst ist von der am Feuchtigkeitssensor vorherrschenden Übertemperatur.

Die DE 10 2011 111 959 A1 zeigt einen Messaufnehmer mit einer Relativanordnung aus Umgebungstemperaturmessfühler, Feuchtigkeitssensor und Elektronik zwischen dem distalen und dem proximalen Ende eines Grundkörpers des Messaufnehmers. Gemäß dieser Schrift sind vom (oberen) distalen Ende her diese Komponenten in der folgenden Reihenfolge angeordnet: Feuchtigkeitssensor (gebildet aus mit NTC-Temperatursensor und Heizelement), Elektronik sowie dann folgend der NTC-Umgebungstemperatursensor.

Die EP 0 970 457 A1 zeigt eine Elektronik eines Messaufnehmers, der auch als Fühlerpatrone bezeichnet wird. Die Fühlerpatrone ist über ein Verbindungskabel mit einer elektronischen Schaltung verbunden.

Es stellt sich die Aufgabe, einen Messaufnehmer vorzuschlagen, der zum einen ein kompaktes Design aufweist und zum anderen eine genaue Ermittlung der Feuchtigkeit ermöglicht.

Hiervon ausgehend wird vorliegend gemäß dem unabhängigen Anspruch 1 ein Messaufnehmer mit einem Temperatursensor zum Erfassen eines Temperaturmesswerts und einem Feuchtigkeitssensor zum Erfassen eines Feuchtigkeitsmesswerts vorgeschlagen.

Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Der Messaufnehmer umfasst einen Grundkörper, der sich entlang einer Erstreckungsrichtung länglich zwischen einem proximalen Ende und einem distalen Ende des Messaufnehmers erstreckt. Am proximalen Ende ist eine Schnittstelle angeordnet, die ausgebildet ist, ein für die Feuchtigkeit indikatives Datensignal auszugeben. Außerdem ist die Schnittstelle ausgebildet, ein Versorgungssignal zum Beheizen des Feuchtigkeitssensors zu empfangen.

Vorgesehen ist bei dem Messaufnehmer weiter eine an dem Grundkörper angeordnete und der Schnittstelle in der Erstreckungsrichtung nachgelagerte Elektronik, die sowohl an den Temperatursensor als auch an den Feuchtigkeitssensor gekoppelt ist. Die Elektronik ist ausgebildet, in Abhängigkeit von dem Temperaturmesswert und dem Feuchtigkeitsmesswert das Datensignal bereitzustellen.

Dabei ist der Feuchtigkeitssensor an dem distalen Ende angeordnet. Der Feuchtigkeitssensor kann auch das distale Ende des Messaufnehmers ausbilden.

Der Temperatursensor umfasst einen Umgebungstemperaturmessfühler, der durch einen Teil des Grundkörpers vom Feuchtigkeitssensor beabstandet ist. Zum Beispiel bildet also der Feuchtigkeitssensor das distale Ende des Messaufnehmers aus, und der Temperatursensor kann zum Beispiel etwa mittig am Grundkörper befestigt sein. Außerdem kann der Umgebungstemperaturmessfühler des Temperatursensors durch einen weiteren Teil des Grundkörpers auch von der Elektronik beabstandet sein.

Der Umgebungstemperaturmessfühler ist zwischen der der Schnittstelle am proximalen Ende in Erstreckungsrichtung nachgelagerten Elektronik und dem distalen Ende mit dem Feuchtigkeitssensor angeordnet.

Der Grundkörper weist eine erste Aussparung auf, die den Umgebungstemperaturmessfühler umrahmt
Die Anordnung des Feuchtigkeitssensors und des Temperatursensors ermöglicht eine genaue Ermittlung der Feuchtigkeit und außerdem eine einfache Installation des Messaufnehmers in einer Anwendung, wobei gleichzeitig sichergestellt sein kann, dass der Temperatursensor gegenüber Fremdeinwirkung geschützt ist. Darüber hinaus kann der Messaufnehmer aufgrund des Abstands zwischen dem Feuchtigkeitssensor und dem Temperatursensor in vorteilhafter Weise kalibriert werden.

Zum Beispiel umfasst der Umgebungstemperaturmessfühler eine Spitze, die nicht zum Feuchtigkeitssensor weist, sondern zum proximalen Ende des Messaufnehmers, also von dem Feuchtigkeitssensor, der beheizt sein kann, weg.

Der Grundkörper kann zum Beispiel als Platine (PCB, Printed Cicuit Board) ausgestaltet sein, bei dem eine Aussparung ausgefräst oder ausgestanzt wird, und in dieser der Umgebungstemperaturmessfühler platziert wird. Somit wird der Umgebungstemperaturmessfühler von dem Grundkörper gegenüber Fremdeinwirkungen geschützt.

Der Grundkörper kann eine zwischen dem Feuchtigkeitssensor und den Temperatursensor angeordnete Entkopplungsstruktur aufweisen. Der Temperatursensor ist also nicht direkt benachbart zum Feuchtigkeitssensor angeordnet, sondern durch einen Teil des Grundkörpers, nämlich der Entkopplungsstruktur, von diesem beabstandet. Die Entkopplungsstruktur kann eine lokal verminderte Wärmeleitfähigkeit aufweisen, wobei eine derartige Verminderung der Wärmeleitfähigkeit auf verschiedene Art und Weise implementiert werden kann, beispielsweise durch die Wahl entsprechender Materialien und/oder durch die geometrische Ausgestaltung. Analoges kann für jenen Teil des Grundkörpers gelten, der den Abstand zwischen dem Umgebungstemperaturmessfühler und der Elektronik herstellt.

Es liegt beispielsweise im Rahmen der Erfindung, dass die Entkopplungsstruktur eine zweite Aussparung des Grundkörpers umfasst bzw. durch eine solche ausgebildet ist. Diese zweite Aussparung kann beispielsweise zwischen dem distalen Ende und der ersten Aussparung positioniert sein, welche den Umgebungstemperaturmessfühler umrahmt. Zum Beispiel weist diese zweite Aussparung eine Länge von mindestens 5 mm (entlang der Längsstreckung des Grundkörpers) auf und/oder eine Breite von mindestens 40 % der Breite des Grundkörpers. Die Breite und/oder die Länge kann/können auch größer gewählt werden, was zu einer entsprechend stärkeren thermischen Entkopplung zwischen dem Feuchtigkeitssensor am distalen Ende und dem Ort des Umgebungstemperaturmessfühlers bewirken würde, solange die mechanische Stabilität des Messaufnehmers nicht gefährdet ist.

Der Feuchtigkeitssensor des Messaufnehmers kann eine separate bzw. zusätzliche Heizung umfassen, die ebenfalls am distalen Ende angeordnet ist. Der Feuchtigkeitssensor kann mit einem Feuchtigkeitsmessfühler und einem Temperaturmessfühler ausgestattet sein, die beispielsweise in einer Art und Weise implementiert sind, wie es in dem eingangs genannten Datenblatt zu der Vorrichtung des Typs "HMC01" beschrieben ist. Bei einer Ausführungsform des Messaufnehmers ist der Feuchtigkeitssensor genau wie in diesem Datenblatt beschrieben ausgestaltet. Der Feuchtigkeitsmessfühler und der Temperaturmessfühler können in einer (beispielsweise durch die oben genannte Heizung) beheizbaren Feuchtigkeitskammer des Feuchtigkeitssensors beherbergt sein. Diese Feuchtigkeitskammer bzw. eine diese räumlich eingrenzende Abschlusshülse kann das distale Ende des Messaufnehmers ausbilden. Zusätzlich zur separaten Heizung kann die Beheizung des Feuchtigkeitssensors auch über einen erhöhten Messstrom des Temperaturmessfühlers bzw. dessen Verlustleistung erfolgen. Die Elektronik kann ausgebildet sein, die Temperatur am Feuchtigkeitssensor geeignet einzustellen.

Die Komponenten des Messaufnehmers, abgesehen von der Schnittstelle, können in einem gemeinsamen Gehäuse integriert sein, das zum Beispiel ein Spritzgussteil umfassen kann. Insbesondere kann das Gehäuse sowohl die Feuchtigkeitskammer des Feuchtigkeitssensors als auch die Elektronik beherbergen.

Die oben beschriebene erste Aussparung des Grundkörpers kann ebenfalls durch das Gehäuse abgebildet werden, sodass eine entsprechende Aussparung des Gehäuses den Umgebungstemperaturmessfühler umrahmt.

Das von der Schnittstelle ausgegebene Datensignal, das von der Elektronik des Messaufnehmers erzeugt worden ist, kann bei einer Ausführungsform des Messaufnehmers die relative Feuchtigkeit und, optional, zusätzlich die Temperatur der Umgebung angeben.

Der Messaufnehmer kann für eine Vielzahl verschiedener Anwendungen ausgebildet sein, bei denen eine möglichst genaue Ermittlung der Feuchtigkeit wichtig ist. In Betracht kommt dabei insbesondere die meteorologische Datenerfassung. Bei einer anderen Ausführungsform ist der Messaufnehmer beispielsweise für eine ortsfeste Installation in einer Klimaanlage, beispielsweise in einer Klimaanlage eines Fahrzeugs, ausgebildet. Andere Anwendungsgebiete schließen die Pharma- und Lebensmittelindustrie ein, Pilzfarmen, Feuchtelager, Klima-, Test- und Reifekammern, die Meteorologie, sowie die Trocknung von Gegenständen, beispielsweise die Trocknung von Keramik, Holz, Beton und/oder Polyester.

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch eine perspektivische Ansicht eines Messaufnehmers gemäß einer oder mehreren Ausführungsformen;
- Fig. 2A-C: jeweils exemplarisch und schematisch eine perspektivische Ansicht eines Ausschnitts eines Messaufnehmers gemäß einer oder mehreren Ausführungsformen;
- Fig. 3: exemplarisch und schematisch eine Aufsicht auf einen Teil eines Feuchtigkeitssensors eines Messaufnehmers gemäß einer oder mehreren Ausführungsformen; und
- Fig. 4: exemplarisch und schematisch eine Querschnittsansicht eines Teil eines Feuchtigkeitssensors eines Messaufnehmers gemäß einer oder mehreren Ausführungsformen; und
- Fig. 5: exemplarisch und schematisch eine Querschnittsansicht eines Temperatursensors eines Messaufnehmers gemäß einer oder mehreren Ausführungsformen.

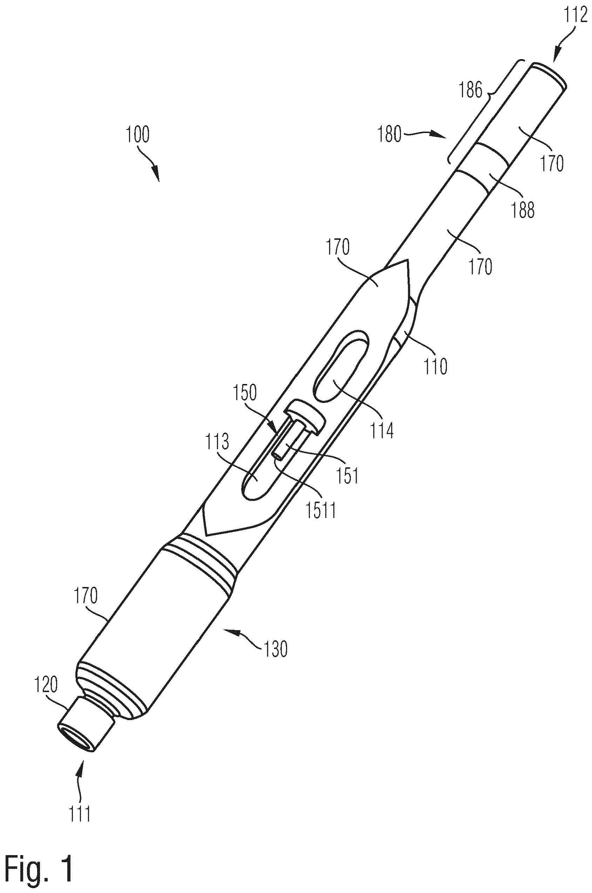

Die Figur 1 zeigt schematisch und exemplarisch eine perspektivische Ansicht eines Messaufnehmers 100. Der Messaufnehmer 100 umfasst einen Temperatursensor 150 zum Erfassen eines Temperaturmesswerts (insbesondere eines Umgebungstemperaturmesswerts) sowie einen Feuchtigkeitssensor 180 zum Erfassen eines Feuchtigkeitsmesswerts.

Der Messaufnehmer 100 basiert auf einem Grundkörper 110, der sich länglich zwischen einem proximalen Ende 111 und einem distalen Ende 112 des Messaufnehmers 100 erstreckt. Der Grundkörper 110 kann eine längliche Erstreckung aufweisen, die wenigstens zweimal so groß ist wie seine mittlere Breite.

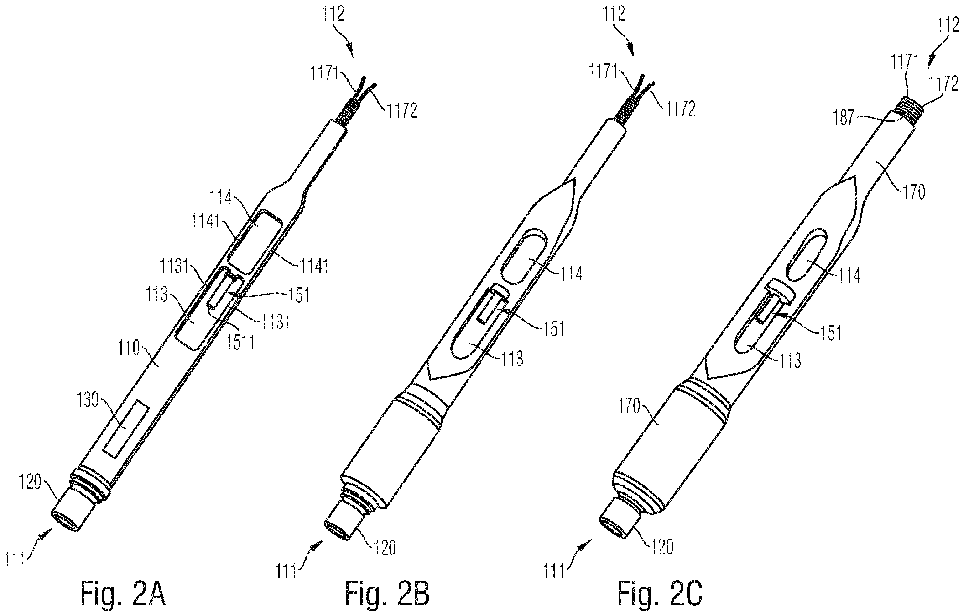

Bei einer Ausführungsform, wie sie schematisch in der Figur 2A dargestellt ist, umfasst der Grundkörper 110 eine Platine, zum Beispiel eine PCB Platine. Der Grundkörper 110 kann auch in Gestalt einer Platine vorliegen. Die Platine kann mit Komponenten des Messaufnehmers 100 bestückt sein.

Am proximalen Ende 111 ist eine Schnittstelle 120 angeordnet, die ausgebildet ist, ein für die Feuchtigkeit indikatives Datensignal auszugeben. Die Schnittstelle 120 ist im vorliegenden Ausführungsbeispiel am Grundkörper 110 befestigt und umfasst einen Stecker, über den das Datensignal auf einen Datenbus ausgegeben wird. Alternativ kann das Datensignal durch die Schnittstelle 120 auch drahtlos als Funksignal ausgegeben werden.

Die Schnittstelle 120 kann mit einem üblichen seriellen Datenübertragungsstandard kompatibel sein, beispielsweise mit dem EIA-485 Standard. Gleichzeitig kann die Schnittstelle 120 auch für eine mechanische Befestigung des Messaufnehmers 100 ausgebildet sein, indem beispielsweise der Stecker auf ein Gewinde auf- bzw. in ein Gewinde eingeschraubt wird. Die Schnittstelle 120 bildet den Übergang zwischen einen Ankopplungspunkt der Anwendung, in welcher der Messaufnehmer 100 installiert sein kann, und dem Grundkörper 110 aus.

Außerdem kann der Messaufnehmer 100 über die Schnittstelle 120 ein Versorgungssignal zum Beheizen des Feuchtigkeitssensors 180 empfangen. Das Versorgungsignal ist beispielswiese ein Strom- oder Spannungssignal.

Der Schnittstelle 120 ist eine in der Fig. 1 nicht sichtbare und in der Fig. 2A nur schematisch dargestellte Elektronik 130 nachgelagert, die an dem Grundkörper 110 befestigt ist. Die Elektronik 130 umfasst beispielsweise eine Auswerteeinheit, die den von den Temperatursensor 150 erfassten Temperaturmesswert und den von dem Feuchtigkeitssensor 180 erfassten Feuchtigkeitsmesswert empfängt, und in Abhängigkeit von diesen das Datensignal, das die Feuchtigkeit (und optional zusätzlich die Umgebungstemperatur) angibt, berechnet, bereitstellt und über die Schnittstelle 120 ausgibt.

Neben der Auswerteeinheit kann die Elektronik 130 auch passive Komponenten und/oder leistungselektronische Komponenten umfassen, und zum Beispiel ausgebildet sein, mittels dieser das Versorgungssignal zu empfangen und es für die Zwecke der Beheizung des Feuchtigkeitssensors 180 zu bearbeiten und an den Feuchtigkeitssensor 180 weiterleiten.

Für die Übertragung des Versorgungssignals bzw. des daraus abgeleiteten Signals sowie für die Übertragung des Temperaturmesswerts und des Feuchtigkeitsmesswerts umfasst der Grundkörper 110, beispielsweise in Gestalt besagter Platine, entsprechende Leitungen, Kabel, und/oder integrierte Leiterbahnen, die in den Zeichnungen jedoch nicht dargestellt sind.

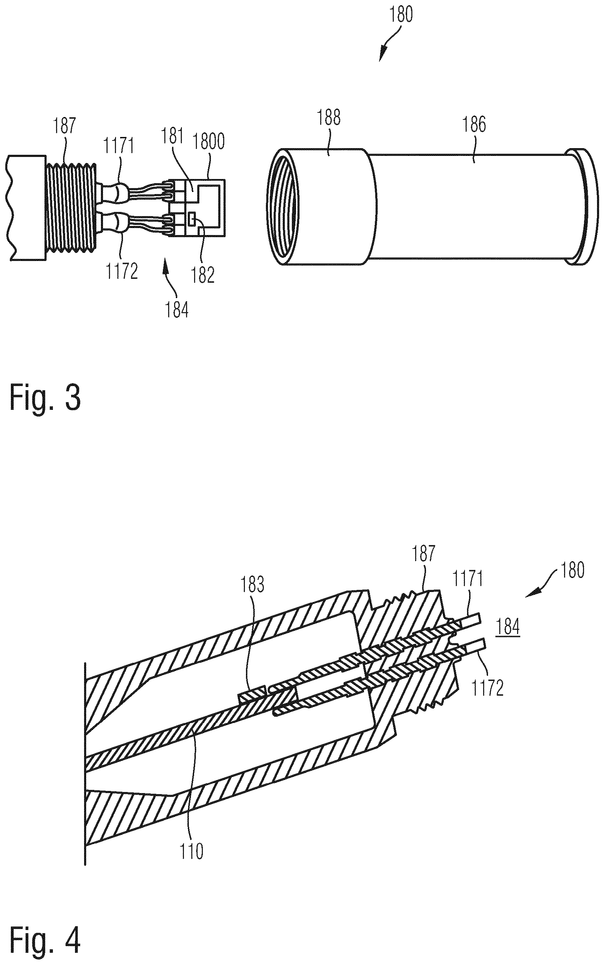

Wie in allen Figuren 1 bis 4 veranschaulicht, ist der Feuchtigkeitssensor 180 an dem distalen Ende 112 des Messaufnehmers 100 angeordnet. Der Feuchtigkeitssensor 180 bildet im dargestellten Ausführungsbeispiel somit das distale Ende des Messaufnehmers 100 aus, was nachstehend mit Bezug auf die Figuren 2A bis 4 etwas näher ausgeführt werden soll:
Am zum distalen Ende 112 weisenden Ende des Grundkörpers 110 sind vorliegend zwei dieses Ende des Grundkörpers 110 überragende Pins 1171 und 1172 vorgesehen, an denen ein Träger 1800 (s. Figur 3) befestigt ist, beispielsweise mittels einer Lötverbindung. Anstelle von den beiden gezeigten Pins 1171, 1172 können aber auch mehrere Pins vorgesehen werden, oder nur ein Pin. Ebenso kann bei einer anderen Ausführungsform des Messaufnehmers ein zu den Pins 1171, 1172 alternatives Kopplungsmittel vorgesehen sein. Zu Veranschaulichungszwecken ist nachstehend jedoch stets von den "den Pins 1171, 1172" die Rede.

Auf dem Träger 1800 ist ein Feuchtigkeitsmessfühler 181 und ein Temperaturmessfühler 182 angeordnet, beispielsweise in einer Art und Weise, wie es aus dem eingangs zitierten Datenblatt zu der Vorrichtung des Typs "HMC01" der E+E ELEKTRONIK Ges.m.b.H. bekannt ist., Hinsichtlich beispielhafter Einzelheiten dieser möglichen Ausführungsform des Feuchtigkeitssensor 180 sei in diesem Zusammenhang auch auf dieses Datenblatt verwiesen.

Der Träger 1800 ist beispielsweise aus einem Glassubstrat gefertigt, der den Temperaturmessfühler 182 und den darüber befindlichen Feuchtigkeitsmessfühler 181 trägt. Eine Beheizung des Trägers 1800 ist hierbei zum einen dadurch möglich, dass der Messstrom des Temperaturmessfühlers 182 geeignet erhöht wird und die daraus resultierende Verlustleistung als Heizleistung genutzt wird. Zum anderen ist beispielsweise am Ende des Grundkörpers 110 eine zusätzliche Beheizung des Feuchtigkeitssensors 180 mit Hilfe einer Heizung 183 möglich, wobei diese Heizung 183 als Heizwiderstand ausgebildet sein kann, der auf dem Grundkörper 110 angeordnet ist. Wenigstens einer der beiden Pins 1171 und 1172 kann dann als Wärmeleitung fungieren, über welche dem Träger 1800 die aus der zusätzlichen Heizung 183 erzeugte Wärme zugeführt wird. Einer der beiden Pins 1171, 1172 kann zum Beispiel auf einer Oberseite des Grundkörpers 110 befestigt sein, und der andere auf einer Unterseite des Grundkörpers 110, wie in der Figur 4 veranschaulicht.

Insbesondere kann es dadurch möglich sein, die Anordnung aus dem Feuchtigkeitsmessfühler 181 und dem Temperaturmessfühler 182 einer Temperatur auszusetzen, die oberhalb der Umgebungstemperatur des Messaufnehmers 100 liegt. Insbesondere kann die Elektronik 130 ausgebildet sein, die Temperatur am Feuchtigkeitssensor 180, beispielsweise am Träger 1800, unter Verwendung der Heizung 183 sowie des Messstroms des Temperaturmessfühlers 182 geeignet einzustellen. Beispielsweise ist der Messaufnehmer 100 ausgebildet, aufgrund der Beheizung eine Betauung des Feuchtigkeitssensors 180 sowie eine damit einhergehende Messwertverfälschung zu verhindern. Eine derartige Betauung könnte bei fehlender Beheizung z.B. insbesondere in einer Umgebung mit hoher Luftfeuchte entstehen.

Die Sensorsignale des Feuchtigkeitsmessfühlers 181 und des Temperaturmessfühlers 182 werden der Elektronik 130, insbesondere der Auswerteeinheit der Elektronik 130, zur weiteren Verarbeitung zugeführt, wobei hierfür neben den beiden Pins 1171, 1172 (nicht dargestellte) Leitungen und/oder Leiterbahnen am bzw. im Grundkörper 110 vorgesehen sein können.

Der Feuchtigkeitssensor 180 weist im dargestellten Ausführungsbeispiel außerdem eine Abschlusshülse 186 auf, die über die Anordnung aus dem Feuchtigkeitsmessfühler 181 und dem Temperaturmessfühler 182 gestülpt werden kann, und zum Beispiel mittels einer Gewindeanordnung 187, 188 mit dem übrigen Teil des Messaufnehmers 100 verbunden werden kann. Durch die Abschlusshülse 186 kann auf diese Art und Weise eine Feuchtigkeitskammer 184 des Feuchtigkeitssensors 180 ausgebildet werden. Diese Abschlusshülse 186 kann gleichzeitig einen Teil eines den Messaufnehmer 100 abschließenden Gehäuses 170 bilden, insbesondere das distale Ende 112 des Messaufnehmers 100.

Der Temperatursensor 150, der zu Erfassung der Umgebungstemperatur dient und folglich einen Umgebungstemperaturmessfühler 151 umfasst, ist nicht am distalen Ende 112 angeordnet. Vielmehr ist der Umgebungstemperaturmessfühler 151 durch einen Teil des Grundkörpers 110 von dem Feuchtigkeitssensor 180 beabstandet und zwischen dem proximalen Ende 111 und dem distalen Ende 112 angeordnet, beispielsweise etwa mittig dem Grundkörper wie in den Figuren 1 bis 2C veranschaulichen. Darüber hinaus kann der Umgebungstemperaturmessfühler 151 durch einen weiteren Teil des Grundkörpers 110 von der Elektronik 130 beabstandet sein.

Die Elektronik 130 ist im vorliegenden Ausführungsbeispiel zwischen dem proximalen Ende 111 und dem Umgebungstemperaturmessfühler 151 vorgesehen.

Aufgrund der von dem beheizten Feuchtigkeitssensor 180 Anordnung des Temperatursensors 150 ist der Umgebungstemperaturmessfühler 151 thermisch von dem beheizten Feuchtigkeitssensor 180 entkoppelt, sodass die Umgebungstemperatur exakt erfasst werden kann.

Auch das Messsignal des Umgebungstemperaturmessfühlers 151 wird im vorliegenden Ausführungsbeispiel der Elektronik 130, insbesondere der Auswerteeinheit der Elektronik 130 zugeführt. Diese kann in Abhängigkeit von dem Messsignal des Umgebungstemperaturfühlers 151, dem Messsignal des Temperaturmessfühler des 182 des Feuchtigkeitssensor 180 und in Abhängigkeit von dem Messsignal des Feuchtigkeitsmessfühlers 181 des Feuchtigkeitssensors 180 das die Feuchtigkeit der Umgebung des Messaufnehmers 100 angebende Datensignal berechnen, bereitstellen und über die Schnittstelle 120 ausgeben.

Die thermische Entkopplung kann weiter dadurch verbessert werden, dass eine Spitze 1511 des Umgebungstemperaturmessfühlers 151 zum proximalen Ende 111 weist, also weg von dem distalen Ende 112, wo der Feuchtigkeitssensor 180 angeordnet ist. Der Ort der Messaufnahme betreffend die tatsächliche Umgebungstemperatur ist somit relativ weit entfernt von dem Ort der Feuchtigkeits-Messung, der, wie gesagt, beheizt sein kann.

Der Grundkörper 110 weist im gezeigten Beispiel eine erste Aussparung 113 auf, die den Umgebungstemperaturmessfühler 151 umrahmt, wie dies in der Figur 2A dargestellt ist. Die Anordnung des Umgebungstemperaturmessfühlers 151 sowie der ersten Aussparung 113 ist in einem möglichen Ausführungsbeispiel derart gewählt, dass auch ein Mindestabstand zwischen der Elektronik 130 und dem Umgebungstemperaturmessfühler 151 eingehalten wird, wobei dieser Mindestabstand durch einen weiteren Teil des Grundkörpers 110 hergestellt sein kann. Denn auch von der Elektronik 130 kann Wärme ausgehen, die die Messung der Umgebungstemperatur verfälschen könnte.

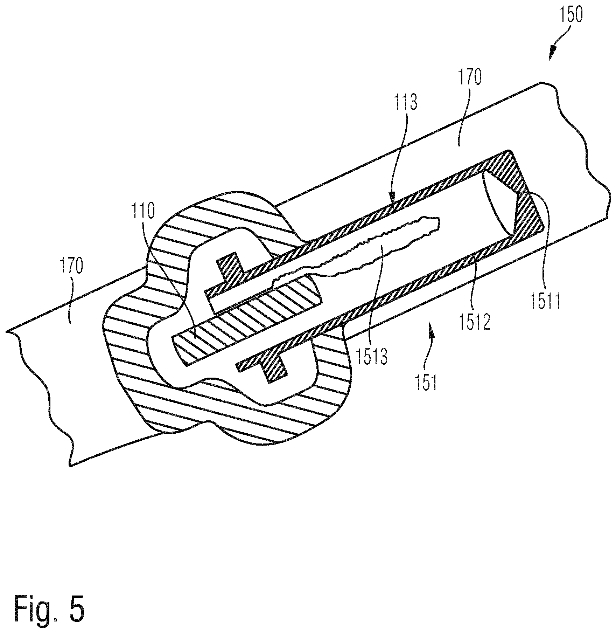

Eine beispielhafte Ausführungsform des Temperatursensors 150 zeigt die Figur 5 anhand einer Querschnittsansicht. Der Temperatursensor 150 umfasst dabei beispielsweise den Umgebungstemperaturmessfühler 151, der ein Sensorelement 1513 aufweist, beispielsweise in Gestalt eines resistiven Temperatursensors (z.B. ein PT100-Sensorelement , ein PT1000-Sensorelement, ein NTC-Sensorelement, oder ein PTC-Sensorelement), welches in einer Hülse 1512, beispielsweise eine Metallhülse 1512, angeordnet ist. Die Spitze 1511 der Hülse 1512 weist in Richtung des proximalen Endes 111 (und nicht zum Feuchtigkeitssensor 180, der sich am distalen Ende 112 befindet bzw. dieses ausbildet). Das Sensorelement 1513 ist beispielsweise an dem Grundkörper 110 angelötet, und die Hülse 1512 ragt teilweise über den entsprechenden Abschnitt des Grundkörpers 110, wie es in der Figur 5 exemplarisch dargestellt ist. Die das Sensorelement 1513 beherbergende Hülse 1512 ist in der ersten Aussparung 113 angeordnet, und so durch die die Aussparung 113 definierenden Teile des Gehäuses 170 geschützt. Außerdem kann der Innenraum der Hülse 1512 mit einem Material hoher Wärmeleitfähigkeit ausgefüllt sein, so dass eine gute thermische Anbindung zwischen der Außenwand der Hülse 1512 und dem innenliegenden Sensorelement 1513 sichergestellt ist.

Die thermische Entkopplung zwischen dem Temperatursensor 150 und dem Feuchtigkeitssensor 180 kann beim Messaufnehmer 100 nicht nur durch die räumliche Beabstandung erzielt werden, sondern auch durch materialtechnische und/oder strukturelle Anpassungen des Grundkörpers 110.

So kann der Grundkörper 110 zum Beispiel zwischen dem Feuchtigkeitssensor 180 und dem Temperatursensor 150 eine Entkopplungsstruktur aufweisen, die zum Beispiel eine lokal verminderte Wärmeleitfähigkeit aufweist.

Die Verminderung der Wärmeleitfähigkeit kann zum Beispiel durch Vorsehen entsprechender Materialien im Grundkörper 110 implementiert werden.

Alternativ oder zusätzlich kann der Grundkörper 110 in dem relevanten Teil auch eine strukturelle Änderung erfahren, wie dies schematisch in der Figur 2A dargestellt ist. Dort weist der Grundkörper 110 eine zweite Aussparung 114 auf, die einen Teil der Entkopplungsstruktur darstellt oder diese ausbildet. Die zweite Aussparung 114 ist zwischen der den Umgebungstemperaturmessfühler 151 umrahmenden ersten Aussparung 113 und dem distalen Ende 112 vorgesehen. Zum Beispiel weist diese Aussparung eine Länge von mindestens 5 mm auf und/oder eine Breite von mindestens 40 % der Breite des Grundkörpers 110. Die zweite Aussparung 114 kann auch größer als entsprechend dieser beispielhaft genannten Werte dimensioniert werden, um eine noch stärker ausgeprägte thermische Entkopplung zwischen dem Feuchtigkeitssensor 180 und dem Temperatursensor 150 hervorzurufen, solange die mechanische Stabilität des Messaufnehmers 100 sichergestellt ist.

Beide Aussparungen 113 und 114 sind in seitlicher Richtung beispielsweise durch entsprechende Verbindungsstege 1131 und 1141 begrenzt, die jeweils vergleichsweise (bezogen auf die Breite des Grundkörpers) schmal ausfallen können und somit eine geringe Wärmeleitfähigkeit aufweisen. Auch dadurch kann die thermische Entkopplung zwischen dem Umgebungstemperaturmessfühler 151 und der Elektronik 130 einerseits sowie dem Feuchtigkeitssensor 180 andererseits sichergestellt sein.

Die vorstehenden Erläuterungen bezogen sich insbesondere auf die thermische Entkopplung zwischen dem Temperatursensor 150 und dem Feuchtigkeitssensor 180. Es versteht sich jedoch, dass zur thermischen Entkopplung von Temperatursensor 150 und Elektronik 130 ähnliche oder gleiche Maßnahmen getroffen werden.

Mit Blick auf eine mögliche Variante zur Herstellung des Messaufnehmers 100 wird nachstehend auf die Figuren 2A-C verwiesen. So wird im vorliegenden Beispiel zunächst der Grundkörper 110 in Gestalt einer Platine bereitgestellt, die mit den für die Zwecke der Messaufnahme notwendigen Komponenten bestückt ist: hierzu gehören etwa die Elektronik 130, der Umgebungstemperaturmessfühler 151 sowie an den Enden zum einen die Schnittstelle 120 und zum anderen die Pins 1171, 1172, die zum später zu installierenden Feuchtigkeitssensor 180 führen. Die Platine weist ferner die erste Aussparung 113 sowie die zweite Aussparung 114 auf, die beispielsweise aus der Platine ausgestanzt oder aus dieser heraus gefräst werden.

Der Grundkörper 110 wird anschließend nach entsprechender Bestückung mit einem Schutzmaterial umspritzt, und zwar beginnend an der Schnittstelle 120 bis hin zu den beiden Pins 1171 und 1172, zum Beispiel durch Durchführung eines sogenannten Hot-Melt-Molding-Verfahrens, wie in Figur 2B veranschaulicht.

Dieses Erzeugnis wird sodann einer Kunststoffumspritzung ausgesetzt, beispielsweise indem es mit einem Thermoplast umspritzt wird, wie in Figur 2C veranschaulicht. An dem Ende des Grundkörpers 110 kann zuvor oder danach noch ein Gewindeteil 187 vorgesehen werden, das zur Aufnahme des entsprechenden Gegenstücks 188 der Abschlusshülse 186 (siehe Figur 3) des Feuchtigkeitssensors 180 ausgebildet ist.

Ebenfalls wieder verweisend auf die Fig. 1 kann der Messaufnehmer 100 also ein den Grundkörper 110 umgebenes Gehäuse 170 aufweisen, das den gesamten Messaufnehmer 100 abschließt und insbesondere sowohl die beheizbare Feuchtigkeitskammer 184 des Feuchtigkeitssensors 180 als auch die Elektronik 130 beherbergt. Entsprechend dem Vorstehenden kann das Gehäuse 170 ein Kunststoffspritzgussteil umfassen.

Zum Beispiel ist das Gehäuse 170 zweistückig ausgebildet, wobei ein erstes monolithisches Stück den Grundkörper 110 vollständig einschließt, z.B. wie in Fig. 2C exemplarisch veranschaulicht, und ein zweites monolithisches Stück durch die Abschlusshülse 186 gebildet ist. Die Abschlusshülse 186 kann ebenfalls als Kunststoffspritzgussteil gefertigt sein.

Der in den Figuren veranschaulichte Messaufnehmer 100 kann für eine Vielzahl verschiedener Anwendungen ausgebildet sein, bei denen eine möglichst genaue Ermittlung der Feuchtigkeit wichtig ist.

Beispielsweise ist der Messaufnehmer 100 zu ortsfesten Installation in einer Klimaanlage, beispielsweise in einer Klimaanlage eines Fahrzeugs, ausgebildet. Andere Anwendungsgebiete schließen die Pharma- und Lebensmittelindustrie ein, Pilzfarmen, Feuchtelager, Klima-, Test- und Reifekammern, die Meteorologie, sowie die Trocknung von Gegenständen, beispielsweise die Trocknung von Keramik, Holz, Beton und/oder Polyester.

Der Messaufnehmer 100 weist beispielsweise eine Gesamtlänge von etwa 250 mm auf, einen mittleren Durchmesser von etwa 24 mm, und die Gesamtlänge des Grundkörpers 110 beträgt aufgrund der Schnittstelle 120 sowie der Abschlusshülse 186 zum Beispiel 50 mm weniger als die Gesamtlänge des Messaufnehmers 100.

Die vorgeschlagene Konstruktion des Messaufnehmers 100 erzielt eine Vielzahl von Vorteilen: zunächst sind der Temperatursensor 150 und der Feuchtigkeitssensor 180 an denselben Grundkörper 110 gekoppelt und müssen somit nicht separat voneinander positioniert werden. Dennoch ist eine thermische Entkopplung des Temperatursensors 150 von dem beheizbaren Feuchtigkeitssensor 180 sichergestellt, beispielsweise durch die die zweite Aussparung 114 umfassende Entkopplungsstruktur. Aufgrund der Anordnung des Umgebungstemperaturmessfühlers 151 innerhalb der ersten Aussparung 113 ist dieser gegenüber Fremdeinwirkung mechanisch geschützt. Die vorgeschlagene Anordnung des Temperatursensors 150 sowie des Feuchtigkeitssensors 180 erlaubt darüber hinaus eine vorteilhafte Kalibrierung des Messaufnehmers 100. Zum Beispiel wird bei der Kalibrierung des Messaufnehmers 100 das durch die Abschlusshülse 186 ausgebildete distale Ende 112 des Messaufnehmers 100 in einem Feuchtekalibrierungsreaktor eingeführt, sodass der Feuchtigkeitssensor 180 isoliert kalibriert werden kann. Separat davon kann der Temperatursensor 150 kalibriert werden. Die oben beschriebene erste Aussparung 113, die den Umgebungstemperaturmessfühler 151 umrahmt, kann weiter so dimensioniert sein, dass die Spitze 1511 des Umgebungstemperaturmessfühlers 151 ausreichend von der zum Beispiel am proximalen Ende 111 befindlichen Elektronik 130, welche ebenfalls zumindest ein wenig Wärme emittieren kann, beabstandet ist, z.B. um wenigstens 5 mm. Darüber hinaus erlaubt die Konstruktion eine einfache Reinigung des Messaufnehmers 100 während eines Feldeinsatzes oder nach einem Feldeinsatz.

Das über die Schnittstelle 120 ausgegebene Datensignal kann insbesondere indikativ sein für die relative Feuchte in der Umgebung des Messaufnehmers 100. Die Elektronik 130 kann darüber hinaus ausgebildet sein, das Messsignal des Temperatursensors 150 als weiteres separates Datensignal über die Schnittstelle 120 auszugeben.

## Patentansprüche

1. Messaufnehmer (100) mit einem Temperatursensor (150) zum Erfassen eines Temperaturmesswerts und einem Feuchtigkeitssensor (180) zum Erfassen eines Feuchtigkeitsmesswerts, umfassend
- einen Grundkörper (110), der sich entlang einer Erstreckungsrichtung länglich zwischen einem proximalen Ende (111) und einem distalen Ende (112) des Messaufnehmers (100) erstreckt;
- eine am proximalen Ende (111) angeordnete Schnittstelle (120), die ausgebildet ist, ein für die Feuchtigkeit indikatives Datensignal auszugeben, und ein Versorgungssignal zum Beheizen des Feuchtigkeitssensors (180) zu empfangen;
- eine an dem Grundkörper (110) angeordnete und der Schnittstelle (120) in der Erstreckungsrichtung nachgelagerte Elektronik (130), die an den Temperatursensor (150) und an den Feuchtigkeitssensor (180) gekoppelt ist, wobei die Elektronik (130) ausgebildet ist, in Abhängigkeit von dem Temperaturmesswert und dem Feuchtigkeitsmesswert das Datensignal bereitzustellen;
wobei:
- der Feuchtigkeitssensor (180) an dem distalen Ende (112) angeordnet ist; und der Temperatursensor (150) einen Umgebungstemperaturmessfühler (151) umfasst, der durch einen Teil des Grundkörpers (110) vom Feuchtigkeitssensor (180) beabstandet ist
**dadurch gekennzeichnet, dass**
der Umgebungstemperaturmessfühler (151) zwischen der der Schnittstelle (120) am proximalen Ende (111) in Erstreckungsrichtung nachgelagerten Elektronik (130) und dem distalen Ende (112) mit dem Feuchtigkeitssensor (180) angeordnet ist, wobei der Grundkörper (110) eine erste Aussparung (113) aufweist, die den Umgebungstemperaturmessfühler (151) umrahmt.

2. Messaufnehmer (100) nach Anspruch 1, wobei der Umgebungstemperaturmessfühler (151) eine Spitze (1511) umfasst, die zum proximalen Ende (111) weist.

3. Messaufnehmer (100) nach einem der vorstehenden Ansprüche, wobei der Umgebungstemperaturmessfühler (151) außerdem durch einen weiteren Teil des Grundkörpers (110) von der Elektronik (130) beabstandet ist.

4. Messaufnehmer (100) nach einem der vorstehenden Ansprüche, wobei zur thermisch entkoppelten Anordnung der Grundkörper (110) zwischen dem Feuchtigkeitssensor (180) und dem Temperatursensor (150) eine lokal verminderte Wärmeleitfähigkeit aufweist.

5. Messaufnehmer (100) nach einem der vorstehenden Ansprüche, wobei zur thermisch entkoppelten Anordnung der Grundkörper (110) zwischen dem Feuchtigkeitssensor (180) und dem Temperatursensor (150) eine zweite Aussparung (114) umfasst.

6. Messaufnehmer (100) nach Anspruch 5, wobei die zweite Aussparung (114) eine Länge von mindestens 5 mm aufweist.

7. Messaufnehmer (100) nach Anspruch 5 oder 6, wobei die zweite Aussparung (114) eine Breite von mindestens 40% der Breite des Grundkörpers (110) aufweist.

8. Messaufnehmer (100) nach einem der vorstehenden Ansprüche, wobei der Feuchtigkeitssensor (180) eine Heizung (183) umfasst, die ebenfalls am distalen Ende (112) angeordnet ist.

9. Messaufnehmer (100) nach einem der vorstehenden Ansprüche, wobei die Elektronik (130) ausgebildet ist, die Temperatur am Feuchtigkeitssensor (180) einzustellen.

10. Messaufnehmer (100) nach einem der vorstehenden Ansprüche, wobei der Feuchtigkeitssensor (180) einen Feuchtigkeitsmessfühler (181) und einen Temperaturmessfühler (182) umfasst.

11. Messaufnehmer (100) nach einem der vorstehenden Ansprüche, weiter umfassend ein den Grundkörper (110) umgebendes Gehäuse (170), das sowohl eine beheizbare Feuchtigkeitskammer (184) des Feuchtigkeitssensor (180) als auch die Elektronik (130) beherbergt.

12. Messaufnehmer (100) nach Anspruch 11, wobei das Gehäuse (170) ein Kunststoffspritzgussteil umfasst.

13. Messaufnehmer (100) nach einem der vorstehenden Ansprüche, wobei der Messaufnehmer (100) zur ortsfesten Installation in einer Klimaanlage ausgebildet ist.

14. Messaufnehmer (100) nach einem der vorstehenden Ansprüche, wobei der Umgebungstemperaturmessfühler (151) ein Sensorelement (1513) aufweist, welches in einer Metallhülse (1512) angeordnet ist, die mit einem Material mit hoher Wärmeleitfähigkeit ausgefüllt ist.

## Claims

1. Measuring pickup (100) having a temperature sensor (150) for detecting a temperature measurement value and having a moisture sensor (180) for detecting a moisture measurement value, comprising
- a main body (110) which extends in an elongate manner between a proximal end (111) and a distal end (112) of the measuring pickup (100) along one direction of extent;
- an interface (120) which is arranged at the proximal end (111) and is designed to output a data signal which is indicative of the moisture and to receive a supply signal for heating the moisture sensor (180);
- an electronics system (130) which is arranged on the main body (110) and is mounted downstream of the interface (120) in the direction of extent and is coupled to the temperature sensor (150) and to the moisture sensor (180), wherein the electronics system (130) is designed to provide the data signal depending on the temperature measurement value and the moisture measurement value;
wherein:
- the moisture sensor (180) is arranged at the distal end (112); and the temperature sensor (150) comprises an ambient temperature sensing device (151) which is spaced apart from the moisture sensor (180) by a portion of the main body (110),
**characterized in that**
the ambient temperature sensing device (151) is arranged between the electronics system (130), which is mounted downstream of the interface (120) at the proximal end (111) in the direction of extent, and the distal end (112) with the moisture sensor (180), wherein the main body (110) has a first cutout (113) which frames the ambient temperature sensing device (151).

2. Measuring pickup (100) according to Claim 1, wherein the ambient temperature sensing device (151) comprises a tip (1511) which points towards the proximal end (111).

3. Measuring pickup (100) according to either of the preceding claims, wherein the ambient temperature sensing device (151) is also spaced apart from the electronics system (130) by a further portion of the main body (110).

4. Measuring pickup (100) according to one of the preceding claims, wherein, for thermally decoupled arrangement, the main body (110) has a locally reduced thermal conductivity between the moisture sensor (180) and the temperature sensor (150).

5. Measuring pickup (100) according to one of the preceding claims, wherein, for thermally decoupled arrangement, the main body (110) comprises a second cutout (114) between the moisture sensor (180) and the temperature sensor (150).

6. Measuring pickup (100) according to Claim 5, wherein the second cutout (114) has a length of at least 5 mm.

7. Measuring pickup (100) according to Claim 5 or 6, wherein the second cutout (114) has a width of at least 40% of the width of the main body (110).

8. Measuring pickup (100) according to one of the preceding claims, wherein the moisture sensor (180) comprises a heater (183) which is likewise arranged at the distal end (112).

9. Measuring pickup (100) according to one of the preceding claims, wherein the electronics system (130) is designed to set the temperature at the moisture sensor (180).

10. Measuring pickup (100) according to one of the preceding claims, wherein the moisture sensor (180) comprises a moisture sensing device (181) and a temperature sensing device (182).

11. Measuring pickup (100) according to one of the preceding claims, further comprising a housing (170) which surrounds the main body (110) and accommodates both a heatable moisture chamber (184) of the moisture sensor (180) and also the electronics system (130).

12. Measuring pickup (100) according to Claim 11, wherein the housing (170) comprises a plastic injection-moulded part.

13. Measuring pickup (100) according to one of the preceding claims, wherein the measuring pickup (100) is designed for stationary installation in an air-conditioning system.

14. Measuring pickup (100) according to one of the preceding claims, wherein the ambient temperature sensing device (151) has a sensor element (1513) which is arranged in a metal sleeve (1512) which is filled with a material of high thermal conductivity.

## Revendications

1. Capteur de mesure (100) avec un capteur de température (150) destiné à détecter une valeur de mesure de température et avec un capteur d'humidité (180) destiné à détecter une valeur de mesure d'humidité, comprenant
- un corps de base (110), qui s'étend en longueur le long d'une direction d'extension entre une extrémité proximale (111) et une extrémité distale (112) du capteur de mesure (100);
- une interface (120) disposée à l'extrémité proximale (111), qui est configurée pour émettre un signal de données indicatif de l'humidité et pour recevoir un signal d'alimentation pour chauffer le capteur d'humidité (180);
- une électronique (130) disposée sur le corps de base (110) et placée après l'interface (120) dans la direction d'extension, qui est couplée au capteur de température (150) et au capteur d'humidité (180), dans lequel l'électronique (130) est configurée pour fournir le signal de données en fonction de la valeur de mesure de température et de la valeur de mesure d'humidité;
dans lequel:
- le capteur d'humidité (180) est disposé à l'extrémité distale (112); et le capteur de température (150) comprend une sonde de mesure de température ambiante (151), qui est espacée du capteur d'humidité (180) par une partie du corps de base (110),
**caractérisé en ce que** la sonde de mesure de température ambiante (151) est disposée entre l'électronique (130) placée après l'interface (120) à l'extrémité proximale (111) dans la direction d'extension et l'extrémité distale (112) avec le capteur d'humidité (180), dans lequel le corps de base (110) présente une découpe (113), qui encadre la sonde de mesure de température ambiante (151).

2. Capteur de mesure (100) selon la revendication 1, dans lequel la sonde de mesure de température ambiante (151) comprend une pointe (1511), qui est tournée vers l'extrémité proximale (111).

3. Capteur de mesure (100) selon l'une quelconque des revendications précédentes, dans lequel la sonde de mesure de température ambiante (151) est par ailleurs espacée de l'électronique (130) par une autre partie du corps de base (110).

4. Capteur de mesure (100) selon l'une quelconque des revendications précédentes, dans lequel le corps de base (110) présente entre le capteur d'humidité (180) et le capteur de température (150) une conductibilité thermique localement réduite pour son agencement thermiquement découplé.

5. Capteur de mesure (100) selon l'une quelconque des revendications précédentes, dans lequel le corps de base (110) comprend entre le capteur d'humidité (180) et le capteur de température (150) une deuxième découpe (114) en vue de son agencement thermiquement découplé.

6. Capteur de mesure (100) selon la revendication 5, dans lequel la deuxième découpe (114) présente une longueur d'au moins 5 mm.

7. Capteur de mesure (100) selon une revendication 5 ou 6, dans lequel la deuxième découpe (114) présente une largeur d'au moins 40 % de la largeur du corps de base (110).

8. Capteur de mesure (100) selon l'une quelconque des revendications précédentes, dans lequel le capteur d'humidité (180) comprend un chauffage (183), qui est également disposé à l'extrémité distale (112).

9. Capteur de mesure (100) selon l'une quelconque des revendications précédentes, dans lequel l'électronique (130) est configurée pour régler la température au capteur d'humidité (180).

10. Capteur de mesure (100) selon l'une quelconque des revendications précédentes, dans lequel le capteur d'humidité (180) comprend une sonde de mesure d'humidité (181) et une sonde de mesure de température (182).

11. Capteur de mesure (100) selon l'une quelconque des revendications précédentes, comprenant en outre un boîtier (170) entourant le corps de base (110), qui héberge aussi bien une chambre d'humidité chauffante (184) du capteur d'humidité (180) que l'électronique (130).

12. Capteur de mesure (100) selon la revendication 11, dans lequel le boîtier (170) comprend une partie moulée par injection en matière plastique.

13. Capteur de mesure (100) selon l'une quelconque des revendications précédentes, dans lequel le capteur de mesure (100) est configuré en vue d'une installation fixe dans une installation de climatisation.

14. Capteur de mesure (100) selon l'une quelconque des revendications précédentes, dans lequel la sonde de mesure de température ambiante (151) présente un élément de capteur (1513), qui est disposé dans une douille métallique (1512), qui est remplie d'une matière à haute conductibilité thermique.
